# EUROPÄISCHE PATENTSCHRIFT

(11) **EP 2 364 063 B1**
(45) Veröffentlichungstag und Bekanntmachung des Hinweises auf die Patenterteilung: **03.10.2012**
(21) Anmeldenummer: 11155939.9
(22) Anmeldetag: 25.02.2011
(51) Int. Cl.: H05B 33/08

(54) **Lampe**
Lamp
Lampe

(30) Priorität: 02.03.2010 DE 102010002489
(43) Veröffentlichungstag der Anmeldung: 07.09.2011
(73) Patentinhaber: OSRAM AG, 81543 München (DE)
(72) Erfinder: Schmacht, Thomas, 85253 Erdweg (DE)

(56) Entgegenhaltungen:
- US-A1- 2006 193 131
- US-A1- 2007 223 225
- US-B1- 6 459 919

## Beschreibung

Die Erfindung betrifft eine Lampe mit einer Schaltung zur Erkennung der Belegung der Anschlüsse der Lampe. Auch wird ein Verfahren zur Ansteuerung der Lampe vorgeschlagen.

Der Röhrendurchmesser von Leuchtstofflampen ist standardisiert. Die Zahl nach dem Buchstaben "T" (für "tube", engl. Röhre) steht dabei für achtel Zo11 (d.h. 1/8*25,4 mm = 3,175 mm). Eine T5-Röhre hat beispielsweise einen Durchmesser von 5/8 Zo11, das entspricht etwa 16 mm. Die Entwicklung begann mit T12 Röhren und geht hin zu schlankeren Röhren, die weniger Material, Volumen bei Transport, Lagerung und Einbau benötigen und eine höhere Lichtausbeute pro Watt ergeben. Üblich sind heute z.B. T8 und T5 Leuchtstofflampen (z.B. in zwei Lichtleistungen "hell" oder "effizient") sowie T4 Leuchtstofflampen als dünne Lichtleisten zur Verwendung z.B. in Regalen.

Die unterschiedlichen Lampen werden nachfolgend mit "Tx-Lampen" bezeichnet, wobei jede dieser Lampen über vier Anschlüsse verfügt. Ergänzend sei angemerkt, dass es sich bei der hier beschriebenen Tx-Lampe insbesondere um die Form der Leuchtstofflampe (mit vier Anschlüssen) handelt. Der Aufbau der Lampe selbst kann im Unterschied zur Leuchtstofflampe auch andere Leuchtmittel, z.B. Halbleiterleuchtelemente bzw. Leuchtdioden (LEDs) umfassen. Insbesondere kann die Tx-Lampe als eine RGB-Lampe ausgeführt sein, die z.B. mehrere Leuchtdioden unterschiedlicher Farben aufweist.

Die Tx-Lampe weist vier Anschlüsse (auch bezeichnet als Pins) auf, die geeignet zur Ansteuerung der einzelnen Farben der RGB-Tx-Lampe eingesetzt werden können. Hierbei ist es jedoch problematisch, dass abhängig von der tatsächlichen Einbauposition der RGB-Tx-Lampe in die Leuchtenfassung die Anschlüsse der Lampe an unterschiedlichen Positionen der Leuchtenfassung kontaktiert werden. Mit anderen Worten, es ist von Nachteil, dass die Tx-Lampe nicht beliebig in die Leuchtenfassung einsetzbar ist, da beispielsweise einzelne Pins der Tx-Lampe für bestimmte Farben angesteuert werden.

US 2007/0223225 offenbart einen Ballast für Leuchstofflampen mit vier Anschlüsse, wobei der Ballast eine Leuchdiodenlampe erkennen kann.

Die **Aufgabe** der Erfindung besteht darin, die vorstehend genannten Nachteile zu vermeiden und insbesondere eine Möglichkeit zu schaffen, eine RGB-Lampe mit codierten Pins beliebig in eine Leuchtenfassung einsetzen zu können.

Diese Aufgabe wird gemäß den Merkmalen der unabhängigen Patentansprüche gelöst. Weiterbildungen der Erfindung ergeben sich auch aus den abhängigen Ansprüchen.

Zur Lösung der Aufgabe wird eine Lampe angegeben mit vier Anschlüssen umfassend eine Schaltung zur Erkennung der Belegung der Anschlüsse,
- mit einer Prozessoreinheit anhand derer Signale der Anschlüsse auswertbar sind,
- wobei die Prozessoreinheit Ausgänge zur Ansteuerung mindestens eines Leuchtmittels aufweist, und
- wobei abhängig von den ausgewerteten Signalen der vier Anschlüsse die Ausgänge angesteuert werden.

Somit kann unabhängig von der tatsächlichen Positionierung der Lampe in der Fassung erreicht werden, dass die richtigen Anschlüsse der Lampe über die Fassung mit dem Betriebsgerät (z.B. mit dem elektronischen Vorschaltgerät, EVG) verbunden sind. Dadurch kann die Lampe nicht falsch in die Fassung eingelegt werden.

Dies ist von Vorteil für eine Lampe, insbesondere eine Tx-Lampe, die als eine sogenannte Retrofit-Lampe ausgeführt ist: Die Form der Lampe kann genutzt werden, um herkömmliche Leuchtstoffröhren durch Lampen mit Halbleiterleuchtelementen zu ersetzen. Insbesondere weisen diese Retrofit-Lampen eine Vielzahl von Halbleiterleuchtelementen oder Leuchtdioden (LEDs) auf, die über das Betriebsgerät geeignet angesteuert werden.

Bei der Prozessoreinheit kann es sich um einen Mikroprozessor, einen Mikrocontroller oder ein ähnliches Bauelement handeln. Beispielsweise können die folgenden Mikrocontroller eingesetzt werden: Atmel-AT Tiny 13 oder Atmel-AT PWM 81.

Die hier beschriebene Lösung ist für jede Lampe einsetzbar, die vier Anschlüsse hat. Beispielsweise kann es sich hierbei um gesockelte "Compact Fluorescent Lamps" (CFL) handeln. Insbesondere können die folgenden Sockel genutzt werden: 2G13 T-U, G10q T-R, 2GX13 T-R5 (T-R16), G24g-1, G24g-2, G24g-3, GX24q-1, GX24q-2, GX24q-3, GX24q-1, GX24q-4, 2G11, 2G7, 2GX7, 2G10, GR10q, GRY10q-3.

Eine Weiterbildung ist es, dass die Signale der Anschlüsse der Lampe mittels dreier Eingänge der Prozessoreinheit auswertbar sind, wobei abhängig von den ausgewerteten Signalen durch die Prozessoreinheit je ein Eingang mit je einem Ausgang der Prozessoreinheit verbindbar ist oder je ein Ausgang von der Prozessoreinheit in einen TriState-Modus schaltbar ist.

Befindet sich ein Ausgang der Prozessoreinheit in einem TriState-Modus, so wird das mit diesem Ausgang verbundene Leuchtmittel direkt über einen Anschluss der Lampe angesteuert und nicht über die Prozessoreinheit. Dies ermöglicht den Einsatz einer Prozessoreinheit mit nur drei Eingängen.

Eine andere Weiterbildung ist es, dass die Signale der Anschlüsse der Lampe mittels vier Eingängen der Prozessoreinheit auswertbar sind, wobei abhängig von den ausgewerteten Signalen durch die Prozessoreinheit ein Massepotential an einem Eingang erkennbar ist und von den verbleibenden Eingängen je ein Eingang mit je einem Ausgang der Prozessoreinheit verbindbar ist.

Der Eingang kann mit dem Ausgang für im Wesentlichen eine Dauer eines pulsweitenmodulierten (PWM-) Signals entsprechend verbunden bzw. getrennt werden. Auch ist es möglich, dass der Eingang mit dem Ausgang entsprechend der Positionierung der Lampe in der Fassung mehr oder weniger dauerhaft (z.B. für die Dauer des Betriebs der Lampe, also wenn diese eingeschaltet ist und von dem Betriebsgerät angesteuert wird) "durchgeschaltet" ist. In diesem Fall können die PWM-Signale von dem Betriebsgerät über die Prozessoreinheit entsprechend dieser Durchschaltung von Ein- und Ausgängen der Prozessoreinheit weitergeleitet werden.

Insbesondere ist es eine Weiterbildung, dass ein Eingang der Prozessoreinheit zweitweise inaktiv schaltbar ist.

Hierbei sei angemerkt, dass ein Eingang dann inaktiv geschaltet wird, wenn eine Spannung an diesem Eingang geringer als eine vorgegebene Spannung (z.B. 3 V) aber größer als Massepotential ist. In diesem Fall erfolgt keine Ansteuerung der betroffenen Farbe der Lampe über das Betriebsgerät (z.B. EVG), das pulsweitenmodulierte Ansteuersignal ist in einer inaktiven oder "LOW" Phase. Entsprechend kann der Eingang aktiv geschaltet werden, falls die Spannung an dem Eingang größer als die vorgegebene Spannung (oder größer als eine weitere vorgebbare Spannung) ist. Dies entspricht einer aktiven oder "HIGH" Phase des pulsweitenmodulierten Ansteuersignals für die jeweilige Farbe der Lampe.

Somit kann vorteilhaft unterschieden werden zwischen einem Massepotential, und unterschiedlichen Spannungen während der aktiven und inaktiven Phasen des pulsweitenmodulierten Ansteuersignals.

Der hier vorgestellte Vorschlag ermöglicht damit einerseits eine Bestimmung der Position der Anschlüsse der Lampe in der Fassung (anhand der Bestimmung, welcher Pin der Lampe mit Massepotential verbunden ist) und andererseits ist es möglich, dass ein pulsweitenmoduliertes Ansteuersignal, das von einem Betriebsgerät der Lampe farbabhängig für einen der drei Pins der Lampe bereitgestellt wird, von der Prozessoreinheit geeignet zur Ansteuerung der Leuchtmittel, insbesondere Leuchtdioden, eingesetzt wird.

Hierbei sei angemerkt, dass es sich beispielhaft bei der Lampe um eine RGB-Lampe handelt. Alternativ können andere Farben oder Farbkombinationen über die Pins der Lampe mittels des Betriebsgeräts angesteuert werden.

Somit kann von dem Betriebsgerät pro Pin der Lampe z.B. eine Farbe angesteuert werden und mittels einer Pulsweitenmodulation kann z.B. die Helligkeit des entsprechenden mindestens einen Leuchtmittels (z.B. mindestens einer LED dieser Farbe) eingestellt werden. Auch kann ein angesteuertes Leuchtmittel der Lampe mehrere Leuchtmittel, z.B. Halbleiterleuchtelemente oder LEDs, in unterschiedlichen Farben aufweisen.

Auch ist es eine Weiterbildung, dass die Prozessoreinheit den Anschluss der Lampe ermittelt, an dem Massepotential anliegt.

Ferner ist es eine Weiterbildung, dass anhand einer vorgegebenen Anordnung der Anschlüsse abhängig von der Position des Anschlusses, der mit Massepotential verbunden ist, die Funktionen der verbleibenden Anschlüsse identifizierbar sind und von der Prozessoreinheit entsprechend die Ausgänge abhängig von den identifizierten Anschlüssen ansteuerbar sind.

Hierbei sei angemerkt, dass die Lampe eine feste Zuordnung ihrer Anschlüsse zu den Funktionen, z.B. Farben (rot, grün, blau) aufweisen kann. So reicht es aus, die Position desjenigen Anschlusses zu bestimmen, der von dem Betriebsgerät mit Masse verbunden ist. Durch die feste Zuordnung der verbleibenden Anschlüsse zu dem Masseanschluss kann von der Lampe bzw. von der Prozessoreinheit der Lampe eine Ansteuerung der Ausgänge bzw. der einzelnen Leuchtmittel entsprechend der Positionierung der Lampe in der Fassung korrekt erfolgen.

Im Rahmen einer zusätzlichen Weiterbildung sind die Funktionen der verbleibenden Anschlüsse identifizierbar mittels einer abgespeicherten Tabelle.

Bei der Tabelle kann es sich um beliebige (zwischen-)gespeicherte Daten (z.B. in Form einer Lookup-Tabelle) handeln, auf die die Prozessoreinheit zugreifen kann. So kann die Prozessoreinheit beispielsweise abhängig von dem Anschluss (oder Pin) der Lampe, der mit Massepotential des Betriebsgeräts verbunden ist, die Belegung der verbleibenden Anschlüsse mittels der Tabelle ermitteln und somit die Ausgänge entsprechend ansteuern.

Eine nächste Weiterbildung besteht darin, dass die Funktionen der verbleibenden Anschlüsse identifizierbar sind anhand eines iterativ auf der Prozessoreinheit ablaufenden Programms.

So ist es möglich, dass auf der Prozessoreinheit ein Programm abläuft, das z.B. fortlaufend in einer Schleife iteriert wird und z.B. innerhalb weniger Mikrosekunden durchlaufen werden kann. Durch entsprechende in dem Programm hinterlegte Abfragen kann die Funktion der vorstehend genannten Tabelle implementiert werden. In diesem Fall muss kein gesonderter Speicher für die Tabelle vorgehalten werden.

Eine Ausgestaltung ist es, dass die Lampe drei Leuchtmittel aufweist.

Eine alternative Ausführungsform besteht darin, dass die Lampe eine RGB-Lampe ist

Eine nächste Ausgestaltung ist es, dass jedes Leuchtmittel mindestens ein Halbleiterleuchtelement, insbesondere mindestens eine Leuchtdiode aufweist.

Insbesondere können pro Leuchtmittel mehrere gleichfarbige oder verschiedenfarbige Leuchtdioden vorgesehen sein. Insbesondere können Stränge von hintereinandergeschalteten Leuchtdioden als Leuchtmittel vorgesehen sein.

Eine Weiterbildung besteht darin, dass drei der vier Anschlüsse der Lampe zur Ansteuerung je einer Farbe, insbesondere rot, grün und blau, eingerichtet sind.

Eine zusätzliche Ausgestaltung ist es, dass die Ansteuerung der Farben über ein pulsweitenmoduliertes Signal eines Betriebsgeräts erfolgt.

Die vorstehend genannte Aufgabe wird auch gelöst durch ein Verfahren zur Ansteuerung einer Lampe,
- bei dem die Lampe vier Anschlüsse aufweist,
- bei dem Signale der Anschlüsse mittels einer Prozessoreinheit ausgewertet werden und
- bei dem Ausgänge der Prozessoreinheit abhängig von den ausgewerteten Signalen angesteuert werden.

Eine Ausgestaltung besteht darin, dass die Signale der Anschlüsse mittels der Prozessoreinheit ausgewertet werden, indem derjenige Anschluss bestimmt wird, der mit Massepotential verbunden ist.

Ausführungsbeispiele der Erfindung werden nachfolgend anhand der Zeichnungen dargestellt und erläutert.

Es zeigen:
- Fig.1: eine schematische Schaltung zur Erkennung einer Positionierung einer Lampe in einer Fassung wobei die Schaltung in der Lampe vorgesehen ist;
- Fig.2: eine alternative Schaltung zur Erkennung der Positionierung einer Lampe in einer Fassung;
- Fig.3: ein schematisches Flussdiagramm, wie es beispielsweise als Programm auf dem Mikroprozessor der Schaltung gemäß Fig.1 ablaufen kann.
Bei den Lampen, auf die in den Figuren 1 bis 3 Bezug genommen wird, kann es sich insbesondere um beispielhaft erwähnte Tx-Lampen handeln.

Es wird insbesondere eine Lösung angegeben, die eine beliebige Positionierung einer Lampe, deren Anschlüsse (auch bezeichnet als Pins) zumindest teilweise mit Farben codiert sind, in einer Leuchtenfassung ermöglicht. So kann automatisch ermittelt werden, in welcher Position die Lampe eingebaut wurde; die Lampe wird entsprechend ihrer tatsächlichen Positionierung in der Leuchtenfassung korrekt angesteuert.

Bei der Lampe kann es sich um eine Lampe umfassend mindestens ein Halbleiterleuchtelement, z.B. eine Leuchtdiode (LED), handeln. Insbesondere kann die Lampe als eine RGB-Lampe ausgeführt sein, umfassend mindestens ein rotes, mindestens ein grünes und mindestens ein blaues Leuchtmittel. Die Lampe wird über ein Betriebsgerät (auch bezeichnet als ein elektronisches Vorschaltgerät, EVG) angesteuert.

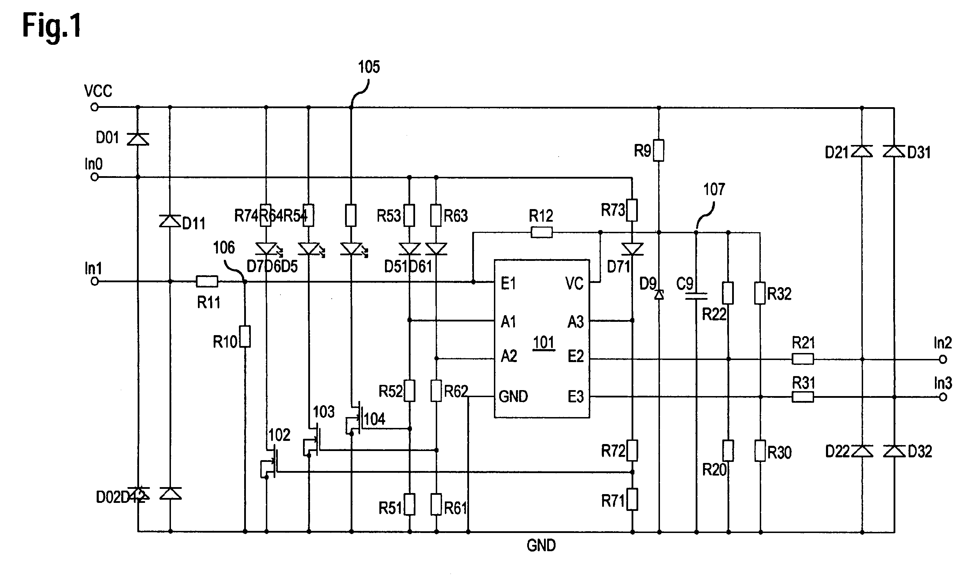

**Fig.1** zeigt eine schematische Schaltung zur Erkennung einer Positionierung einer Lampe in einer Fassung, wobei die Schaltung in der Lampe vorgesehen ist.

Die Lampe weist vier Pins In0, In1, In2 und In3 auf. Insbesondere umfasst die Lampe einen Mikroprozessor 101 mit Eingängen E1, E2, E3 sowie Ausgängen A1, A2, A3. Der Mikroprozessor 101 weist außerdem einen Anschluss für Masse (GND) sowie einen Anschluss VC für eine Versorgungsspannung auf.

Der Pin In0 ist über eine Diode D01 mit einem Knoten 105 verbunden, wobei die Kathode der Diode D01 in Richtung des Knotens 105 zeigt. An dem Knoten 105 liegt auch ein Potential der positiven Versorgungsspannung VCC der Schaltung gemäß Fig.1. Der Pin In0 ist über eine Diode D02 mit Masse (GND) verbunden, wobei die Kathode der Diode D02 in Richtung des Pins In0 zeigt.

Der Pin In1 ist über eine Diode D11 mit dem Knoten 105 verbunden, wobei die Kathode der Diode D11 in Richtung des Knotens 105 zeigt. Der Pin In1 ist über eine Diode D12 mit Masse (GND) verbunden, wobei die Kathode der Diode D12 in Richtung des Pins In1 zeigt. Weiterhin ist der Pin In1 über einen Widerstand R11 mit einem Knoten 106 verbunden.

Der Knoten 106 ist mit dem Eingang E1 des Mikroprozessors 101 verbunden. Weiterhin ist der Knoten 106 über einen Widerstand R10 mit Masse verbunden.

Der Knoten 105 ist über eine Serienschaltung aus einem Widerstand R74 und einer Leuchtdiode D7 mit einem Drain-Anschluss eines Mosfets 102 verbunden. Der Source-Anschluss des Mosfets 102 ist mit Masse verbunden. Die Kathode der Leuchtdiode D7 zeigt in Richtung des Mosfets 102.

Der Knoten 105 ist über eine Serienschaltung aus einem Widerstand R64 und einer Leuchtdiode D6 mit einem Drain-Anschluss eines Mosfets 103 verbunden. Der Source-Anschluss des Mosfets 103 ist mit Masse verbunden. Die Kathode der Leuchtdiode D6 zeigt in Richtung des Mosfets 103.

Der Knoten 105 ist über eine Serienschaltung aus einem Widerstand R54 und einer Leuchtdiode D5 mit einem Drain-Anschluss eines Mosfets 104 verbunden. Der Source-Anschluss des Mosfets 104 ist mit Masse verbunden. Die Kathode der Leuchtdiode D5 zeigt in Richtung des Mosfets 104.

Die Leuchtdiode D7 ist beispielsweise als eine grüne Leuchtdiode, die Leuchtdiode D6 ist beispielsweise als eine rote Leuchtdiode und die Leuchtdiode D5 ist beispielsweise als eine blaue Leuchtdiode ausgeführt. Somit handelt es sich bei der Lampe um eine RGB-Lampe. Insbesondere können jeweils eine oder mehrere Leuchtdioden, z.B. ein Strang von Leuchtdioden (z.B. in Reihenschaltung) vorgesehen sein.

Der Pin In0 ist über eine Serienschaltung aus einem Widerstand R53 und einer Diode D51 mit dem Ausgang A1 des Mikroprozessors 101 verbunden, wobei die Kathode der Diode D51 in Richtung des Ausgangs A1 zeigt.

Der Pin In0 ist über eine Serienschaltung aus einem Widerstand R63 und einer Diode D61 mit dem Ausgang A2 des Mikroprozessors 101 verbunden, wobei die Kathode der Diode D61 in Richtung des Ausgangs A2 zeigt.

Der Pin In0 ist über eine Serienschaltung aus einem Widerstand R73 und einer Diode D71 mit dem Ausgang A3 des Mikroprozessors 101 verbunden, wobei die Kathode der Diode D71 in Richtung des Ausgangs A3 zeigt.

Der Ausgang A1 ist weiterhin über eine Serienschaltung umfassend Widerstände R52 und R51 mit Masse verbunden. Der Mittenabgriff der Serienschaltung aus den Widerständen R52 und R51 ist mit dem Gate-Anschluss des Mosfets 104 verbunden.

Der Ausgang A2 ist weiterhin über eine Serienschaltung umfassend Widerstände R62 und R61 mit Masse verbunden. Der Mittenabgriff der Serienschaltung aus den Widerständen R62 und R61 ist mit dem Gate-Anschluss des Mosfets 103 verbunden.

Der Ausgang A3 ist weiterhin über eine Serienschaltung umfassend Widerstände R72 und R71 mit Masse verbunden. Der Mittenabgriff der Serienschaltung aus den Widerständen R72 und R71 ist mit dem Gate-Anschluss des Mosfets 102 verbunden.

Zwischen dem Eingang E1 des Mikroprozessors 101 und dem Anschluss VC des Mikroprozessors 101 ist ein Widerstand R12 angeordnet. Der Anschluss VC ist mit einem Knoten 107 verbunden.

Zwischen dem Knoten 105 und dem Knoten 107 ist ein Widerstand R9 angeordnet. Zwischen dem Knoten 107 und Masse ist eine Zenerdiode D9 vorgesehen, deren Kathode in Richtung des Knotens 107 zeigt. Beispielsweise weist die Zenerdiode D9 eine Durchbruchsspannung von 5 Volt auf. Parallel zu der Zenerdiode D9 ist ein Kondensator C9 angeordnet.

Der Knoten 107 ist weiterhin über einen Widerstand R22 mit dem Eingang E2 des Mikroprozessors 101 verbunden. Der Eingang E2 ist über eine Widerstand R20 mit Masse verbunden. Auch ist der Eingang E2 über einen Widerstand R21 mit dem Pin In2 verbunden. Der Knoten 105 ist über eine Diode D21 mit dem Pin In2 verbunden und der Pin In2 ist über eine Diode D22 mit Masse verbunden. Die Kathode der Diode D21 zeigt in Richtung des Knotens 105 und die Kathode der Diode D22 zeigt in Richtung des Pins In2.

Der Knoten 107 ist weiterhin über einen Widerstand R32 mit dem Eingang E3 des Mikroprozessors 101 verbunden. Der Eingang E3 ist über eine Widerstand R30 mit Masse verbunden. Auch ist der Eingang E3 über einen Widerstand R31 mit dem Pin In3 verbunden. Der Knoten 105 ist über eine Diode D31 mit dem Pin In3 verbunden und der Pin In3 ist über eine Diode D32 mit Masse verbunden. Die Kathode der Diode D31 zeigt in Richtung des Knotens 105 und die Kathode der Diode D32 zeigt in Richtung des Pins In3.

Der Mikroprozessor 101 weist sechs Ein- und Ausgänge auf. Die Lampe hat 4 Anschlüsse (Pins In0 bis In3), anhand derer drei LED-Farben (z.B. rot, grün, blau) anzusteuern sind. Somit könnte der Mikroprozessor also eine geeignete Ansteuerung vornehmen, wenn insgesamt sieben Ein- und Ausgänge verfügbar wären. Die in Fig.1 gezeigte Schaltung ermöglicht es jedoch, die drei Farben der Lampe anzusteuern mittels eines Mikroprozessors, der nur sechs Ein- und Ausgänge aufweist.

Die Eingänge E1 bis E3 des Mikroprozessors werden dazu wie folgt ausgewertet:
Befindet sich an einem der Anschlüsse der Lampe, also an einem der Pins In0 bis In3 eine Spannung, so wird über die Diode D01 für den Pin In0, über die Diode D11 für den Pin In1, über die Diode D21 für den Pin In2 und über die Diode D31 für den Pin In3 diese Spannung an den Knoten 105 geleitet.

Befindet sich an einem der Pins In0 bis In3 Massepotential, so wird über die Diode D02 für den Pin In0, über die Diode D12 für den Pin In1, über die Diode D22 für den Pin In2 und über die Diode D32 für den Pin In3 diese Masse auf die Masse GND der in Fig.1 gezeichneten Schaltung weitergeleitet.

Die Spannungsversorgung für den Mikroprozessor 101 (über dessen Anschluss VC) wird anhand der Zenerdiode D9 in Verbindung mit dem Kondensator C9 erreicht. Alternativ kann ein Spannungsregler, z.B. ein Bauelement 7805 (5 Volt-Spannungsregler), verwendet werden.

Ist der Pin In1 unbeschaltet, so teilt sich die Spannung über die Widerstände R10, R11 und R12 entsprechend der gewählten Werte auf. Das Potential zwischen den Widerständen R11 und R12 wird an den Eingang E1 des Mikroprozessors 101 angelegt und von diesem als ein "Low-Signal" bewertet.

Liegt eine Spannung an dem Pin In1, so verändert sich die Spannungsaufteilung über die Widerstände R10, R11 und R12 entsprechend. An dem Eingang E1 des Mikroprozessors 101 liegt ein höheres Potential an, das von diesem als "High-Signal" erkannt werden kann.

Ist der Pin In1 mit Masse verbunden, so verändert sich die Spannungsaufteilung über die Widerstände R10, R11 und R12 so, dass das am Eingang E1 des Mikroprozessors 101 anliegende niedrigere Potential als Masse gewertet wird.

Eine Auswertung der an den Eingängen E2 und E3 anliegenden Signale funktioniert entsprechend.

Anhand der nachfolgend dargestellten Tabelle kann der Mikroprozessor 101 feststellen, welcher Pin In0 bis In3 die Ausgänge A1 bis A3 und damit die LEDs D5 bis D7 ansteuert.

| Masse liegt an dem Pin | Signal vom Eingang ... auf A2 (rot) | Signal vom Eingang ... auf A1 (blau) | Signal vom Eingang ... auf A3 (grün) |
|---|---|---|---|
| In0 | E3 | E1 | E2 |
| In1 | E2 | TriState | E3 |
| In2 | E1 | E3 | TriState |
| In3 | TriState | E2 | E1 |

Liegt Masse an einem der Pins In1 bis In3, so wird einer der Ausgänge A1 bis A3 entsprechend der Darstellung in der Tabelle hochohmig, d.h. in einen TriState-Modus geschaltet. Liegt Masse an dem Pin In0, so werden die Ausgänge A1 bis A3 entsprechend der ersten Zeile der vorstehenden Tabelle mit den Eingängen E1 bis E3 verbunden.

Der Pin In0 ist in dem in Fig.1 gezeigten
Schaltungsbeispiel nicht mit einem Eingang des Mikroprozessors 101 verbunden, wohingegen die verbleibenden Pins In1 bis In3 jeweils über den Widerstand R11, R21 und R31 mit den Eingängen E1 bis E3 des Mikroprozessors 101 verbunden sind. Allerdings kann der Mikroprozessor 101 anhand der Zustände an seinen Eingängen E1 bis E3 auch den Zustand erkennen, dass an dem Pin In0 Massepotential anliegt; dies ist nämlich dann der Fall, wenn an keinem der Eingänge E1 bis E3 Massepotential detektiert werden kann.

Die Ansteuerung der betroffenen Leuchtdiode kann direkt über den Pin der Lampe erfolgen und zwar
- über den Widerstand R53 und die Diode D51 bei der blauen LED (falls Massepotential am Pin In1 anliegt),
- über den Widerstand R63 und die Diode D61 bei der roten LED (falls Massepotential an dem Pin In3 anliegt) und
- über den Widerstand R73 und die Diode D71 bei der grünen LED (falls Massepotential an dem Pin In2 anliegt) .

In Fig.1 ist beispielhaft gezeigt, dass der Mikroprozessor 101 die jeweilige LED über Mosfets ansteuert. Entsprechend sind andere Treiberschaltungen möglich. Auch kann eine Vielzahl von Leuchtmitteln pro Strang (d.h. pro Farbe rot, grün oder blau) vorgesehen sein.

Der Gate-Anschluss eines Mosfets kann über ein High- oder ein Low-Signal des Mikroprozessors 101 gesteuert werden. Ist der Ausgang des Mikroprozessors 101 auf TriState geschaltet, so kann der Pin In0 den entsprechenden Mosfet ansteuern.

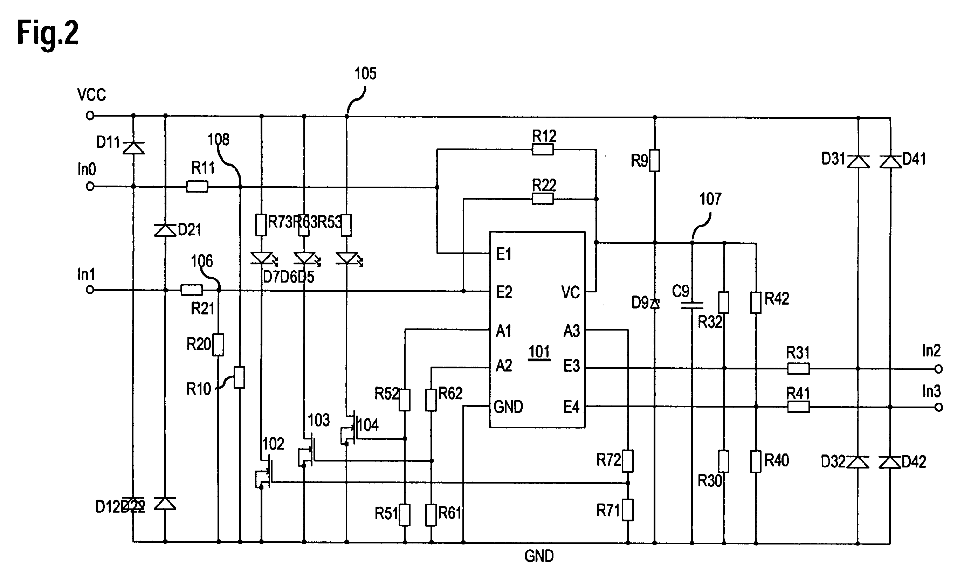

**Fig.2** zeigt eine alternative Schaltung zur Erkennung der Positionierung einer Lampe in einer Fassung basierend auf der Darstellung von Fig.1, wobei ein Mikroprozessor 101 vier Eingänge E1 bis E4 und drei Ausgänge A1 bis A4 aufweist.

Die Lampe umfasst wieder die vier Pins In0, In1, In2 und In3. Der Mikroprozessor 101 hat einen Anschluss für Masse sowie einen Anschluss VC für eine Versorgungsspannung.

Der Pin In0 ist über eine Diode D11 mit einem Knoten 105 verbunden, wobei die Kathode der Diode D11 in Richtung des Knotens 105 zeigt. Der Knoten 105 entspricht auch der positiven Versorgungsspannung VCC. Der Pin In0 ist über eine Diode D12 mit Masse (GND) verbunden, wobei die Kathode der Diode D12 in Richtung des Pins In0 zeigt.

Der Pin In1 ist über eine Diode D21 mit dem Knoten 105 verbunden, wobei die Kathode der Diode D21 in Richtung des Knotens 105 zeigt. Der Pin In1 ist über eine Diode D22 mit Masse (GND) verbunden, wobei die Kathode der Diode D22 in Richtung des Pins In1 zeigt.

Weiterhin ist der Pin In1 über einen Widerstand R21 mit einem Knoten 106 verbunden. Der Pin In0 ist über einen Widerstand R11 mit einem Knoten 108 verbunden.

Der Knoten 106 ist mit dem Eingang E2 des Mikroprozessors 101 verbunden. Weiterhin ist der Knoten 106 über einen Widerstand R20 mit Masse verbunden.

Der Knoten 108 ist mit dem Eingang E1 des Mikroprozessors 101 verbunden. Weiterhin ist der Knoten 108 über einen Widerstand R10 mit Masse verbunden.

Der Knoten 105 ist über eine Serienschaltung aus einem Widerstand R73 und einer Leuchtdiode D7 mit einem Drain-Anschluss eines Mosfets 102 verbunden. Der Source-Anschluss des Mosfets 102 ist mit Masse verbunden. Die Kathode der Leuchtdiode D7 zeigt in Richtung des Mosfets 102.

Der Knoten 105 ist über eine Serienschaltung aus einem Widerstand R63 und einer Leuchtdiode D6 mit einem Drain-Anschluss eines Mosfets 103 verbunden. Der Source-Anschluss des Mosfets 103 ist mit Masse verbunden. Die Kathode der Leuchtdiode D6 zeigt in Richtung des Mosfets 103.

Der Knoten 105 ist über eine Serienschaltung aus einem Widerstand R53 und einer Leuchtdiode D5 mit einem Drain-Anschluss eines Mosfets 104 verbunden. Der Source-Anschluss des Mosfets 104 ist mit Masse verbunden. Die Kathode der Leuchtdiode D5 zeigt in Richtung des Mosfets 104.

Die Leuchtdiode D7 ist beispielsweise als eine grüne Leuchtdiode, die Leuchtdiode D6 ist beispielsweise als eine rote Leuchtdiode und die Leuchtdiode D5 ist beispielsweise als eine blaue Leuchtdiode ausgeführt. Somit handelt es sich bei der Lampe um eine RGB-Lampe. Insbesondere können jeweils eine oder mehrere Leuchtdioden, z.B. ein Strang von Leuchtdioden (z.B. in Reihenschaltung) vorgesehen sein.

Der Ausgang A1 des Mikroprozessors 101 ist über eine Serienschaltung umfassend Widerstände R52 und R51 mit Masse verbunden. Der Mittenabgriff der Serienschaltung aus den Widerständen R52 und R51 ist mit dem Gate-Anschluss des Mosfets 104 verbunden.

Der Ausgang A2 ist über eine Serienschaltung umfassend Widerstände R62 und R61 mit Masse verbunden. Der Mittenabgriff der Serienschaltung aus den Widerständen R62 und R61 ist mit dem Gate-Anschluss des Mosfets 103 verbunden.

Der Ausgang A3 ist über eine Serienschaltung umfassend Widerstände R72 und R71 mit Masse verbunden. Der Mittenabgriff der Serienschaltung aus den Widerständen R72 und R71 ist mit dem Gate-Anschluss des Mosfets 102 verbunden.

Zwischen dem Eingang E1 des Mikroprozessors 101 und dem Anschluss VC des Mikroprozessors 101 ist ein Widerstand R12 angeordnet. Weiterhin ist der Eingang E2 über einen Widerstand R22 mit dem Anschluss VC verbunden. Der Anschluss VC ist mit einem Knoten 107 verbunden.

Zwischen dem Knoten 105 und dem Knoten 107 ist ein Widerstand R9 angeordnet. Zwischen dem Knoten 107 und Masse ist eine Zenerdiode D9 vorgesehen, deren Kathode in Richtung des Knotens 107 zeigt. Beispielsweise weist die Zenerdiode D9 eine Durchbruchsspannung von 5 Volt auf. Parallel zu der Zenerdiode D9 ist ein Kondensator C9 angeordnet.

Der Knoten 107 ist weiterhin über einen Widerstand R32 mit dem Eingang E3 des Mikroprozessors 101 verbunden. Der Eingang E3 ist über eine Widerstand R30 mit Masse verbunden. Auch ist der Eingang E3 über einen Widerstand R31 mit dem Pin In2 verbunden. Der Knoten 105 ist über eine Diode D31 mit dem Pin In2 verbunden und der Pin In2 ist über eine Diode D32 mit Masse verbunden. Die Kathode der Diode D31 zeigt in Richtung des Knotens 105 und die Kathode der Diode D32 zeigt in Richtung des Pins In2.

Der Knoten 107 ist weiterhin über einen Widerstand R42 mit dem Eingang E4 des Mikroprozessors 101 verbunden. Der Eingang E4 ist über eine Widerstand R40 mit Masse verbunden. Auch ist der Eingang E4 über einen Widerstand R41 mit dem Pin In3 verbunden. Der Knoten 105 ist über eine Diode D41 mit dem Pin In3 verbunden und der Pin In3 ist über eine Diode D42 mit Masse verbunden. Die Kathode der Diode D41 zeigt in Richtung des Knotens 105 und die Kathode der Diode D42 zeigt in Richtung des Pins In3.

Im Unterschied zur Schaltung von Fig.1 wird in Fig.2 ein Mikroprozessor verwendet, der eine ausreichende Anzahl von Ein- und Ausgängen aufweist. Damit entfällt die Beschaltung für den Pin In0 gemäß Fig.1 (d.h. die Bauteile R53, D51, R63, D61, R73 und D71 können entfallen). Stattdessen wird der ursprüngliche Pin In0 der Lampe analog zu den anderen Pins In1 bis In3 beschaltet.

Der Mikroprozessor 101 muss somit nicht länger einen Ausgang in den TriState-Modus schalten, sondern kann den zusätzlichen Eingang direkt mit dem Ausgang verbinden.

Es ergibt sich die folgende Tabelle für den Mikroprozessor:

| Masse liegt an dem Pin | Signal vom Eingang ... auf A2 (rot) | Signal vom Eingang ... auf A1 (blau) | Signal vom Eingang ... auf A3 (grün) |
|---|---|---|---|
| In0 | E2 | E4 | E3 |
| In1 | E1 | E3 | E4 |
| In2 | E4 | E2 | E1 |
| In3 | E3 | E1 | E2 |

Somit werden, falls Masse mit dem Pin In2 verbunden ist, der Ausgang A2 mit dem Eingang E4, der Ausgang A1 mit dem Eingang E2 und der Ausgang A3 mit dem Eingang E1 verbunden. Falls Massepotential an einem der Pins In0 bis In3 der Lampe anliegt, wird dies von dem Mikroprozessor 101 erkannt und entsprechend einer abgespeicherten Belegung (siehe Tabelle) erfolgt eine Verbindung der verbleibenden Pins der Lampe mit den einzelnen Farben. Somit kann unabhängig vom Einbau der Lampe in die zugehörige Fassung eine korrekte Ansteuerung der einzelnen Farben über die Pins der Lampe sichergestellt werden.

Beispielsweise ist es möglich, das die Lampe eine vorgegebene Belegung ihrer Pins aufweist, z.B. ist ein Pin Masse, der andere Pin auf der gleichen Seite der Lampe entspricht der Farbe grün, der Pin gegenüber dem Masseanschluss entspricht der Farbe rot und der verbleibende Pin entspricht der Farbe blau. Damit kann durch Erkennung der Masse mittels des Mikroprozessors rückgeschlossen werden auf eine Belegung der verbleibenden Pins. Diese Belegung ist z.B. in dem Mikroprozessor (oder einem zusätzlichen Speicher) abgelegt (siehe oben dargestellte Tabellen) und kann somit zur korrekten Ansteuerung der Lampe eingesetzt werden.

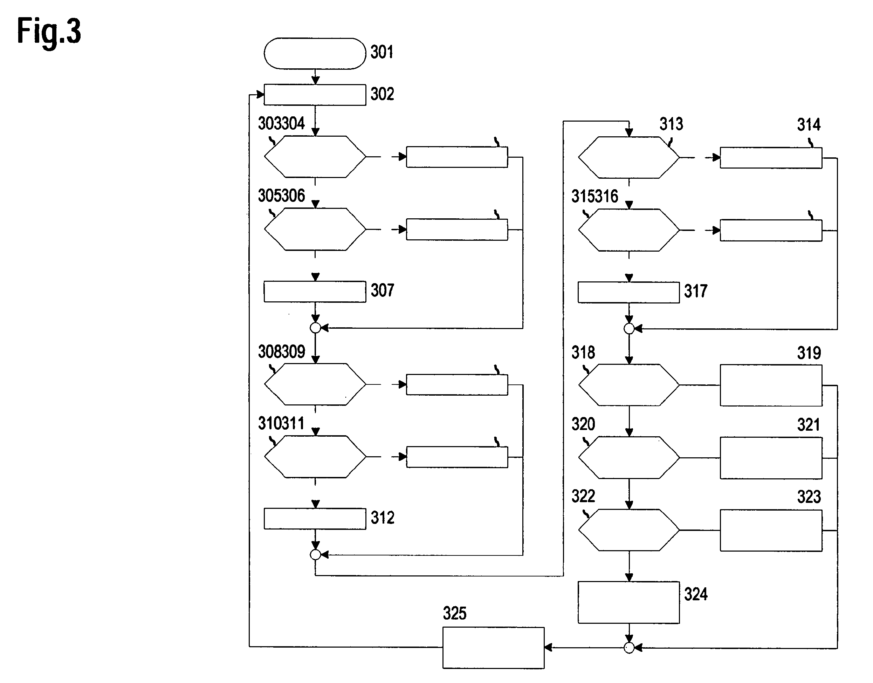

**Fig.3** zeigt ein schematisches Flussdiagramm, wie es beispielsweise als Programm auf dem Mikroprozessor ablaufen kann. Vorzugsweise reagiert der Mikroprozessor auf pulsweitenmodulierte Signale, die über die vier Pins der Lampe für die Farben rot, grün und blau anliegen. Das beispielhaft gezeigte Programm bezieht sich auf den Mikroprozessor 101, wie er in der Schaltung gemäß Fig.1 eingesetzt ist.

Nach einem Start 301 des Programms, erfolgt ein Reset 302. In einem Schritt 303 wird geprüft, ob die Spannung an dem Eingang E1 (des Mikroprozessors) 0 V beträgt. In diesem Fall wird erkannt (siehe Schritt 304), dass Massepotential an dem Pin In1 der Lampe anliegt, es wird zu einem Schritt 308 verzweigt. Beträgt die Spannung an dem Eingang E1 nicht 0 V, so wird in einem Schritt 305 geprüft, ob die Spannung an dem Eingang E1 größer als 3 V ist. In diesem Fall wird in einem Schritt 306 der Eingang E1 aktiv geschaltet, ansonsten (siehe Schritt 307) wird der Eingang E1 inaktiv geschaltet.

In einem nächsten Schritt 308 wird geprüft, ob die Spannung an dem Eingang E2 0 V beträgt. In diesem Fall wird erkannt (siehe Schritt 309), dass Massepotential an dem Pin In2 der Lampe anliegt, es wird zu einem Schritt 313 verzweigt. Beträgt die Spannung an dem Eingang E2 nicht 0 V, so wird in einem Schritt 310 geprüft, ob die Spannung an dem Eingang E2 größer als 3 V ist. In diesem Fall wird in einem Schritt 311 der Eingang E2 aktiv geschaltet, ansonsten (siehe Schritt 312) wird der Eingang E2 inaktiv geschaltet.

In einem nächsten Schritt 313 wird geprüft, ob die Spannung an dem Eingang E3 0 V beträgt. In diesem Fall wird erkannt (siehe Schritt 314), dass Massepotential an dem Pin In3 der Lampe anliegt, es wird zu einem Schritt 318 verzweigt. Beträgt die Spannung an dem Eingang E3 nicht 0 V, so wird in einem Schritt 315 geprüft, ob die Spannung an dem Eingang E3 größer als 3 V ist. In diesem Fall wird in einem Schritt 316 der Eingang E3 aktiv geschaltet, ansonsten (siehe Schritt 317) wird der Eingang E3 inaktiv geschaltet. In einem nächsten Schritt 318 wird abgefragt, ob Massepotential an dem Pin In0 anliegt (dies ist der Fall, wenn an keinem der Pins In1 bis In3 Massepotential anliegt). In diesem Fall werden in einem Schritt 319 die rote Leuchtdiode (bzw. der Ausgang A2) mit dem Eingang E3, die grüne Leuchtdiode (bzw. der Ausgang A3) mit dem Eingang E2 und die blaue Leuchtdiode (bzw. der Ausgang A1) mit dem Eingang E1 verbunden. Es wird zu einem Schritt 325 verzweigt, demgemäß die Leuchtdioden entsprechend angesteuert werden.

In einem dem Schritt 318 folgenden Schritt 320 wird abgefragt, ob Massepotential an dem Pin In1 anliegt (dies wurde in dem Schritt 304 festgestellt). In diesem Fall werden in einem Schritt 321 die rote Leuchtdiode (bzw. der Ausgang A2) mit dem Eingang E2, die grüne Leuchtdiode (bzw. der Ausgang A3) mit dem Eingang E3 verbunden und der Ausgang A1 wird in den TriState-Modus geschaltet. Es wird zu dem Schritt 325 verzweigt, demgemäß die Leuchtdioden entsprechend angesteuert werden.

In einem dem Schritt 320 folgenden Schritt 322 wird abgefragt, ob Massepotential an dem Pin In2 anliegt (dies wurde in dem Schritt 309 festgestellt). In diesem Fall werden in einem Schritt 323 die rote Leuchtdiode (bzw. der Ausgang A2) mit dem Eingang E1, die blaue Leuchtdiode (bzw. der Ausgang A1) mit dem Eingang E3 verbunden und der Ausgang A3 wird in den TriState-Modus geschaltet. Es wird zu dem Schritt 325 verzweigt, demgemäß die Leuchtdioden entsprechend angesteuert werden.

In einem dem Schritt 322 folgenden Schritt 324 werden die grüne Leuchtdiode (bzw. der Ausgang A3) mit dem Eingang E1, die blaue Leuchtdiode (bzw. der Ausgang A1) mit dem Eingang E2 verbunden und der Ausgang A2 wird in dem TriState-Modus geschaltet. Es wird zu dem Schritt 325 verzweigt.

Nach dem Schritt 325 wird zu dem Schritt 302 rückverzweigt.

Das in Fig.3 dargestellte Programm ermöglicht eine Ansteuerung der Ausgänge A1 bis A3 so, dass die rote, grüne und blaue Leuchtdiode jeweils entsprechend den an den Pins der Lampe anliegenden Signalen (z.B. den für die jeweilige Farbe bestimmen pulsweitenmodulierten Signalen von dem Betriebsgerät der Lampe) aktiviert bzw. deaktiviert werden und zwar unabhängig von der tatsächlichen Positionierung der Lampe in der Fassung.

## Patentansprüche

1. Lampe mit vier Anschlüssen (In0, In1, In2, In3) umfassend eine Schaltung zur Erkennung der Belegung der Anschlüsse, **gekennzeichnet durch**
- eine Prozessoreinheit (101) anhand derer Signale der Anschlüsse auswertbar sind,
- wobei die Prozessoreinheit Ausgänge (A1, A2, A3) zur Ansteuerung mindestens eines Leuchtmittels (D5, D6, D7) aufweist, und
- wobei abhängig von den ausgewerteten Signalen der vier Anschlüsse die Ausgänge angesteuert werden.

2. Lampe nach Anspruch 1, bei der die Signale der Anschlüsse der Lampe mittels dreier Eingänge (E1, E2, E3) der Prozessoreinheit auswertbar sind, wobei abhängig von den ausgewerteten Signalen durch die Prozessoreinheit je ein Eingang mit je einem Ausgang der Prozessoreinheit verbindbar ist oder je ein Ausgang von der Prozessoreinheit in einen TriState-Modus schaltbar ist.

3. Lampe nach Anspruch 1, bei der die Signale der Anschlüsse der Lampe mittels vier Eingängen (E1, E2, E3, E4) der Prozessoreinheit auswertbar sind, wobei abhängig von den ausgewerteten Signalen durch die Prozessoreinheit ein Massepotential an einem Eingang erkennbar ist und von den verbleibenden Eingängen je ein Eingang mit je einem Ausgang der Prozessoreinheit verbindbar ist.

4. Lampe nach einem der Ansprüche 2 oder 3, bei der ein Eingang der Prozessoreinheit zweitweise inaktiv schaltbar ist.

5. Lampe nach einem der vorhergehenden Ansprüche, bei der die Prozessoreinheit den Anschluss der Lampe ermittelt, an dem Massepotential anliegt.

6. Lampe nach Anspruch 5, bei der anhand einer vorgegebenen Anordnung der Anschlüsse abhängig von der Position des Anschlusses, der mit Massepotential verbunden ist, die Funktionen der verbleibenden Anschlüsse identifizierbar sind und von der Prozessoreinheit entsprechend die Ausgänge abhängig von den identifizierten Anschlüssen ansteuerbar sind.

7. Lampe nach Anspruch 6, bei der die Funktionen der verbleibenden Anschlüsse identifizierbar sind mittels einer abgespeicherten Tabelle.

8. Lampe nach Anspruch 6, bei der die Funktionen der verbleibenden Anschlüsse identifizierbar sind anhand eines iterativ auf der Prozessoreinheit ablaufenden Programms.

9. Lampe nach einem der vorhergehenden Ansprüche, bei der die Lampe drei Leuchtmittel aufweist.

10. Lampe nach einem der vorhergehenden Ansprüche, bei der die Lampe eine RGB-Lampe ist.

11. Lampe nach einem der vorhergehenden Ansprüche, bei der jedes Leuchtmittel mindestens ein Halbleiterleuchtelement, insbesondere mindestens eine Leuchtdiode aufweist.

12. Lampe nach einem der vorhergehenden Ansprüche, bei der drei der vier Anschlüsse der Lampe zur Ansteuerung je einer Farbe, insbesondere rot, grün und blau, eingerichtet sind.

13. Lampe nach Anspruch 12, bei der die Ansteuerung der Farben über ein pulsweitenmoduliertes Signal eines Betriebsgeräts erfolgt.

14. Verfahren zur Ansteuerung einer Lampe,
- bei dem die Lampe vier Anschlüsse aufweist,
- bei dem Signale der Anschlüsse mittels einer Prozessoreinheit ausgewertet werden und
- bei dem Ausgänge der Prozessoreinheit abhängig von den ausgewerteten Signalen angesteuert werden.

15. Verfahren nach Anspruch 14, bei dem die Signale der Anschlüsse mittels der Prozessoreinheit ausgewertet werden, indem derjenige Anschluss bestimmt wird, der mit Massepotential verbunden ist.

## Claims

1. Lamp with four connections (In0, In1, In2, In3) comprising a circuit for identifying the assignment of the connections, **characterized by**
- a processor unit (101), by means of which signals from the connections can be evaluated,
- the processor unit having outputs (A1, A2, A3) for driving at least one light-emitting means (D5, D6, D7), and
- the outputs being driven depending on the evaluated signals from the four connections.

2. Lamp according to Claim 1, in which the signals from the connections of the lamp can be evaluated by means of three inputs (E1, E2, E3) of the processor unit, it being possible, by means of the processor unit, depending on the evaluated signals, for in each case one input to be connected to in each case one output of the processor unit or for in each case one output of the processor unit to be switched to a tri-state mode.

3. Lamp according to Claim 1, in which the signals from the connections of the lamp can be evaluated by means of four inputs (E1, E2, E3, E4) of the processor unit, it being possible, by means of the processor unit, depending on the evaluated signals, for an earth potential to be identified at one input and for, of the remaining inputs, in each case one input to be connected to in each case one output of the processor unit.

4. Lamp according to either of Claims 2 and 3, in which one input of the processor unit can be switched so as to be temporarily inactive.

5. Lamp according to one of the preceding claims, in which the processor unit determines the connection of the lamp at which earth potential is present.

6. Lamp according to Claim 5, in which on the basis of a predetermined arrangement of the connections, depending on a position of the connection which is connected to earth potential, the functions of the remaining connections are identifiable and correspondingly the outputs can be driven by the processor unit depending on the identified connections.

7. Lamp according to Claim 6, in which the functions of the remaining connections are identifiable by means of a stored table.

8. Lamp according to Claim 6, in which the functions of the remaining connections are identifiable on the basis of a program running iteratively on the processor unit.

9. Lamp according to one of the preceding claims, in which the lamp has three light-emitting means.

10. Lamp according to one of the preceding claims, in which the lamp is an RGB lamp.

11. Lamp according to one of the preceding claims, in which each light-emitting means has at least one semiconductor light-emitting element, in particular at least one light-emitting diode.

12. Lamp according to one of the preceding claims, in which three of the four connections of the lamp are designed for driving in each case one colour, in particular red, green and blue.

13. Lamp according to Claim 12, in which the driving of the colours takes place via a pulse-width-modulated signal from an operating device.

14. Method for driving a lamp,
- in which the lamp has four connections,
- in which signals from the connections are evaluated by means of a processor unit, and
- in which outputs of the processor unit are driven depending on the evaluated signals.

15. Method according to Claim 14, in which the signals from the connections are evaluated by means of the processor unit by virtue of that connection which is connected to earth potential being determined.

## Revendications

1. Lampe pourvue de quatre connexions (In0, In1, In2, In3), comprenant un circuit de détection de l'affectation des connexions, **caractérisée par**
- une unité de processeur (101) au moyen de laquelle des signaux des connexions peuvent être analysés
- l'unité de processeur étant pourvue de sorties (A1, A2, A3) pour commander au moins un moyen d'éclairage (D5, D6, D7) et
- les sorties étant commandées en fonction des signaux analysés des quatre connexions.

2. Lampe selon la revendication 1, dans laquelle les signaux des connexions de la lampe peuvent être analysés au moyen de trois entrées (E1, E2, E3) de l'unité de processeur, l'unité de processeur pouvant, en fonction des signaux analysés, relier une entrée respective à une sortie respective de l'unité de processeur ou commuter une sortie respective de l'unité de processeur dans un mode trois états.

3. Lampe selon la revendication 1, dans laquelle les signaux des connexions de la lampe peuvent être analysés au moyen de quatre entrées (E1, E2, E3, E4) de l'unité de processeur, l'unité de processeur pouvant, en fonction des signaux analysés, détecter un potentiel de masse à une entrée et relier chacune des entrées restantes à une sortie respective de l'unité de processeur.

4. Lampe selon l'une des revendications 2 ou 3, dans laquelle une entrée de l'unité de processeur peut être commutée temporairement à l'état inactif.

5. Lampe selon l'une des revendications précédentes, dans laquelle l'unité de processeur détermine la connexion de la lampe à laquelle le potentiel de masse est appliqué.

6. Lampe selon la revendication 5, dans laquelle, grâce à un agencement prédéfini des connexions, les fonctions des connexions restantes peuvent être identifiées en fonction de la position de la connexion à laquelle le potentiel de masse est appliqué et, en fonction des connexions identifiées, l'unité de processeur peut commander les sorties en conséquence.

7. Lampe selon la revendication 6, dans laquelle les fonctions des connexions restantes peuvent être identifiées au moyen d'une table enregistrée.

8. Lampe selon la revendication 6, dans laquelle les fonctions des connexions restantes peuvent être identifiées au moyen d'un programme se déroulant de manière itérative sur l'unité de processeur.

9. Lampe selon l'une des revendications précédentes, dans laquelle la lampe comprend trois moyens d'éclairage.

10. Lampe selon l'une des revendications précédentes, dans laquelle la lampe est une lampe rouge-vert-bleu.

11. Lampe selon l'une des revendications précédentes, dans laquelle chaque moyen d'éclairage comprend au moins un élément d'éclairage semi-conducteur, notamment au moins une diode électroluminescente.

12. Lampe selon l'une des revendications précédentes, dans laquelle trois des quatre connexions de la lampe sont adaptées pour commander chacune une couleur, notamment rouge, vert et bleu.

13. Lampe selon la revendication 12, dans laquelle la commande des couleurs s'effectue par le biais d'un signal modulé en largeur d'impulsion d'un appareil de commande.

14. Procédé de commande d'une lampe,
- dans lequel la lampe est pourvue de quatre connexions,
- dans lequel les signaux des connexions sont analysés au moyen d'une unité de processeur et
- dans lequel les sorties de l'unité de processeur sont commandées en fonction des signaux analysés.

15. Procédé selon la revendication 14, dans lequel les signaux des connexions sont analysés au moyen de l'unité de processeur qui détermine ainsi la connexion qui est reliée au potentiel de masse.
